# FASCICULE DE BREVET EUROPEEN

(11) **EP 0 621 207 B1**
(45) Date de publication et mention de la délivrance du brevet: **21.07.1999**
(21) Numéro de dépôt: 94870068.7
(22) Date de dépôt: 18.04.1994
(51) Int. Cl.: B65D 81/02, B65D 85/48, B29C 47/04

(54) **Profilés pour la protection d'objets, notamment contre les chocs**
Profile zum Schutz von Gegenständen, insbesondere gegen Stösse
Profile for protecting objects in particular against shock

(30) Priorité: 19.04.1993 BE 9300386
(43) Date de publication de la demande: 26.10.1994
(73) Titulaire: NMC S.A., B-4731 Raeren (BE)
(72) Inventeur: Heck, Dieter, B-4670 Blegny (BE); Despineux, Paul, B-4701 Kettenis (BE); Beguin, Jean-François, B-4000 Liège (BE)
(74) Mandataire: Thirion, Robert

(56) Documents cités:
- DE-U- 9 001 475
- GB-A- 2 074 092
- US-A- 4 805 774
- US-A- 5 101 976

## Description

La présente invention a pour objet un profilé destiné, notamment à être appliqué sur au moins deux faces contigües d'objets à maintenir espacés les uns des autres et à protéger contre les chocs lors de leur manutention, stockage et transport et réalisé en un matériau élastique connu pour absorber les chocs, en particulier matériau se présentant sous forme de mousse, en particulier plastique.

Ce type de profilé est connu suivant DE-U-9001475 et déjà largement utilisé, essentiellement pour la protection, contre les chocs, des pare-brise, vitres et lunettes arrière, pour véhicules automobiles, lors de leur manutention, stockage ou transport. Il est réalisé en un matériau élastique se présentant sous forme de mousse et a une section transversale, en U. Il est posé sur tout le périmètre du pare-brise à protéger afin que la tranche de celui-ci soit insérée entre les deux ailes du U, pour prendre appui sur la face interne de l'âme du U.

A l'usage, il s'est avéré que ce type de profilé présentait un inconvénient majeur, à savoir la desctruction du matériau constituant surtout l'âme du U susdite et qui est provoquée principalement par l'objet à protéger qui perce et/ou cisaille ce matériau soit sous l'effet de son propre poids, soit suite à des sollicitations dues à des chocs.

On a déjà tenté de remédier à cet inconvénient, d'une part, en profilant de diverses manières les faces internes des ailes du U pour tenter d'améliorer l'immobilisation du profilé par rapport à l'objet à protéger et, d'autre part, en tentant de renforcer l'âme du U soit en posant sur la face interne de cette âme un tube de renforcement, soit en insérant un tel tube dans l'épaisseur de ladite âme ou encore en garnissant la face externe de l'âme du U d'un film de renforcement.

Ces diverses solutions proposées, pour remédier à l'inconvénient précité, n'ont pas permis d'améliorer de manière sensible la résistance de l'âme du U notamment au percement et/ou au cisaillement par l'objet auquel est associé le profilé. En effet, les faces internes profilées susdites des ailes du U ne peuvent pas s'opposer d'une manière suffisante à l'enfoncement de la tranche de l'objet dans l'âme du U. Il en va de même des tubes précités associés à l'âme du U qui sont contournés par la tranche de l'objet lorsque celle-ci a tendance à s'enfoncer dans l'âme du U. Quant au film précité, il n'entre en action pour s'opposer au cisaillement et/ou au percement du profilé que lorsque la tranche de l'objet a déjà pratiquement détruit l'âme du U pour l'atteindre et gravement hypothéqué la capacité d'amortissement du U.

L'invention a pour but de remédier à l'inconvénient précité et de procurer un profilé, de fabrication simple, offrant une résistance élevée au percement et/ou au cisaillement tout en conservant toutes les propriétés d'amortissement de la mousse constituant le profilé ainsi que pratiquement toute la flexibilité de cette dernière.

Il doit être entendu que l'invention concerne non seulement un profilé de section en U, mais également tout profilé dont les faces internes sont destinées à s'appliquer, pour les protéger des chocs, sur deux ou plusieurs faces contigües d'un objet.

A cet effet, suivant l'invention, ledit profilé est couvert, au moins dans une zone interne du profilé située en regard du raccordement des deux faces contigües précitées, d'une couche de matériau présentant une résistance au percement et/ou au cisaillement et/ou au déchirement et/ou à l'abrasion qui est supérieure à la résistance offerte par le matériau élastique susdit, comme defini par la revendication 1.

Suivant une forme de réalisation avantageuse du profilé suivant l'invention, la flexibilité de la couche de matériau susdite est telle que la flexibilité du profilé est voisine de celle du matériau élastique précité.

Suivant un mode de réalisation particulièrement avantageux du profilé suivant l'invention, la couche de matériau précitée est fixée au matériau élastique constituant le profilé.

L'invention a également pour objet un procédé pour la fabrication d'un profilé de section en U.

Suivant l'invention, ce procédé consiste à extruder en continu un profilé de section rectangulaire en délimitant dans celui-ci un évidement cylindrique d'axe parallèle à l'axe longitudinal du profilé, à refroidir et à sécher le profilé extrudé, à entailler celui-ci en continu, à partir d'une de ses faces extérieures et parallèlement aux faces contigües de cette face, jusqu'à l'évidement précité, afin de former le U précité et à introduire dans l'entaille réalisée une tête d'extrusion qui dépose, soit en continu, soit en section disposées à intervalles réguliers et peu distantes les unes des autres, la couche de matériau précitée.

D'autres détails et particularités de l'invention ressortiront de la description des dessins annexés au présent mémoire et qui représentent, à titre d'exemples non limitatifs, diverses formes de réalisation particulières du profilé suivant l'invention.
Les figures 1 et 2 sont des vues en perspective et avec brisures partielles de deux profilés différents conformes à l'invention.
Les figures 3 à 8 sont des vues en coupe montrant des variantes des deux profilés illustrés aux figures 1 et 2.
La figure 9 est une vue schématique correspondant à la figure 3 dont la partie hachurée représente la zone de mousse du profilé qui travaille pour amortir les chocs dirigés vers la tranche de l'objet protégé lorsque les faces internes du profilé ne sont pas garnies de la couche de matériau susdite.
La figure 10 est une vue analogue à la figure 9 et montre la zone de mousse du profilé illustré à la figure 3, qui travaille pour amortir les chocs lorsque les faces internes dudit profilé sont garnies de la couche de matériau précitée.
La figure 11 est une vue schématique montrant la manière dont ont été réalisés les tests comparatifs entre la résistance au percement d'un profilé montré à la figure 4 dépourvue de la couche de matériau susdite et de ce même profilé garni de ladite couche de matériau.

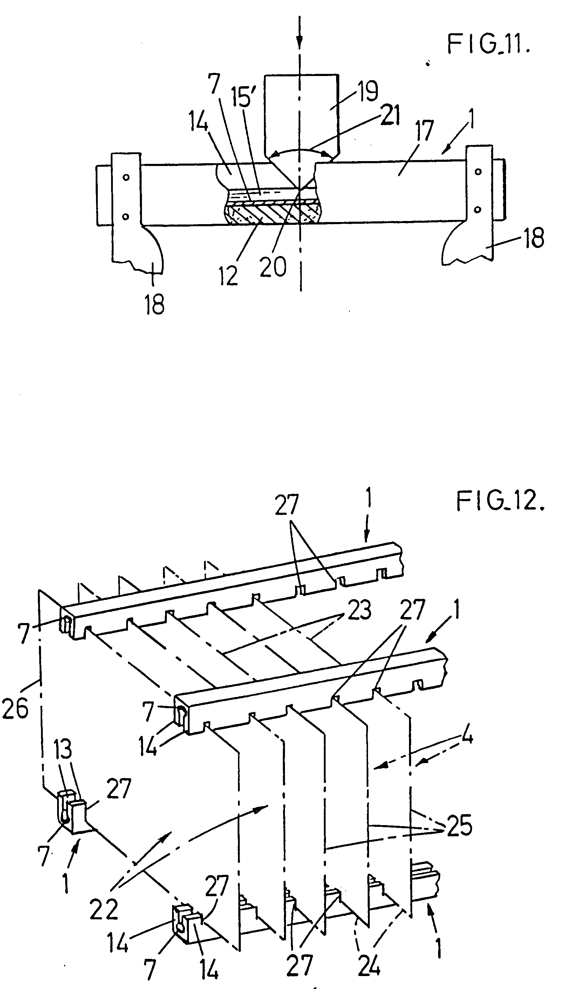

La figure 12 est une vue schématique, en perspective et avec brisures partielles, montrant une utilisation particulière de profilés analogues à celui montré à la figure 4, conçus principalement pour la protection de la périphérie d'objets tels que pare-brise, qui, après transformation peuvent être associés à des objets, tels que portières de voitures, pouvant être disposés parallèlement les uns aux autres et à distances les uns des autres pour, d'une part, maintenir l'écartement entre lesdits objets et, d'autre part, amortir les chocs que pourraient subir ces objets soit suivant des directions transversales aux axes longitudinaux des profilés, soit suivant ces axes.
La figure 13 est une vue schématique, en perspective et avec brisures partielles, montrant une variante des profilés illustrés à la figure 12.
La figure 14 est une vue schématique, en perspective et avec brisures partielles, illustrant une autre forme de réalisation du profilé suivant l'invention, pour le type d'utilisation repris à la figure 12.
La figure 15 est une vue schématique, en élévation, illustrant le procédé suivant lequel le profilé de la figure 4 est fabriqué.

Dans les différentes figures, les mêmes notations de référence désignent des éléments identiques ou analogues.

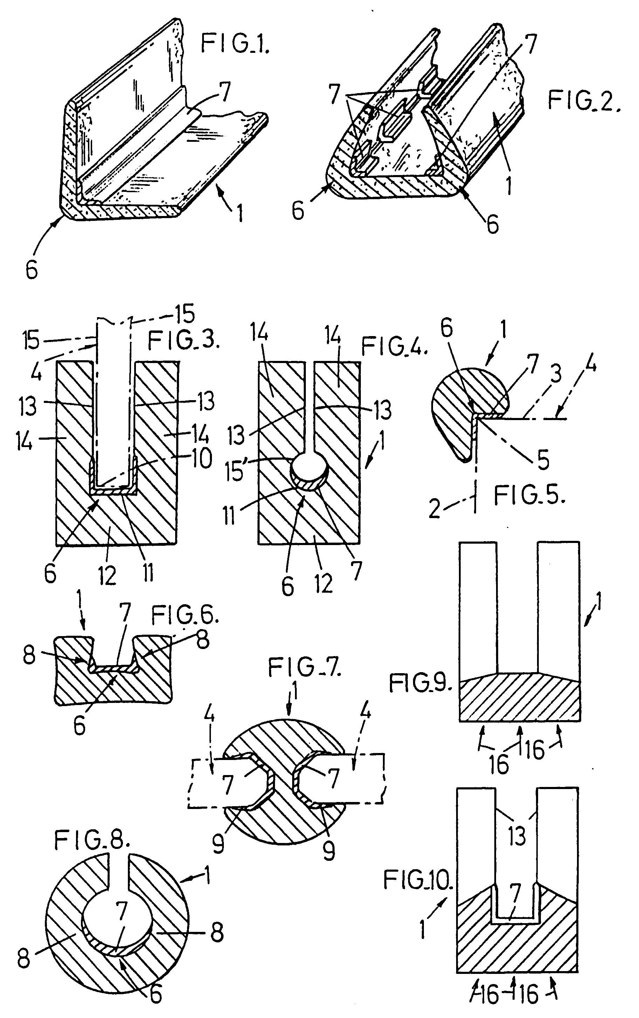

Le profilé 1, suivant l'invention et comme illustré aux dessins, est généralement destiné à être appliqué sur au moins deux faces contigües 2 et 3 d'un objet 4 (voir la figure 5 où l'objet est amorcé en traits discontinus) pour protéger ces faces et l'arête 5 commune à ces dernières contre les chocs lors de la manipulation, le stockage ou le transport de l'objet. Ledit profilé est réalisé en un matériau élastique, connu pour absorber les chocs et se présentant sous forme de mousse plastique, qui est par exemple choisi dans la famille des polyoléfines et de leurs copolymères. Ce profilé 1 est couvert (voir les formes de réalisations illustrées aux figures 1 à 8 et 12, 13), suivant son axe longitudinal et au moins dans sa zone interne 6 située en regard de l'arête 5 précitée, d'une couche de matériau 7 qui présente une résistance au percement, au cisaillement, à l'abrasion et au déchirement supérieure à la résistance à ces diverses sollicitations qui est offerte par le matériau susdit se présentant sous forme de mousse.

Pour conserver au profilé 1 une flexibilité proche de celle du profilé réalisé entièrement en matériau élastique se présentant sous forme de mousse, et ce pour que le profilé suivant l'invention puisse s'adapter parfaitement aux contours de l'objet à protéger, on choisit, pour la couche 7 précitée, un matériau qui fait par exemple partie de la famille des polyoléfines et de leurs copolymères et dont la flexibilité est voisine de celle du matériau élastique susdit.

Pour éviter tout déplacement de ladite couche 7 par rapport au profilé 1 soit lorsque celui-ci est mis en place sur l'objet à protéger, soit lorsqu'il est soumis à des chocs, cette couche 7 est avantageusement, suivant l'invention, fixée au matériau élastique constituant le profilé.

Cette couche de matériau 7 couvre avantageusement, en continu, la zone 6 susdite du profilé 1, suivant l'axe longitudinal de ce dernier et comme montré notamment à la figure 1. Toutefois, dans certains cas où il y aurait intérêt à accroître la flexibilité du profilé 1, on pourrait réaliser, comme montré à la figure 2, la couche 7 en discontinu, les tronçons de cette dernière étant alors, de préférence, égaux et régulièrement espacés les uns des autres.

Les profilés 1 montrés aux figures 6 et 8, qui sont des variantes du profilé illustré à la figure 2, sont destinés à protéger la tranche d'objets contre les chocs, la couche de matériau 7 de ces profilés couvrant toute leur zone 6 destinée à venir en contact avec la tranche susdite, ainsi que leurs zones 8 destinées à venir au contact des faces de l'objet à protéger qui sont contigües à ladite tranche, à proximité de cette dernière.

Le profilé 1 montré à la figure 7, garni d'une couche de matériau 7 dans chacune des rainures 9 opposées réalisées dans le profilé, est plus particulièrement destiné à être utilisé comme intercalaire entre deux objets 4 à protéger des chocs, tandis que les deux profilés 1 illustrés aux figures 3 et 4 sont plus particulièrement destinés à protéger les tranches 10 d'objets de faible épaisseur, tels que pare-brise, vitres et lunettes arrières pour véhicules automobiles. Ces deux derniers profilés de section en U, qui se placent sur tout le pourtour de l'objet à protéger et qui sont maintenus en position par un film rétractable recouvrant l'ensemble objet 4 et profilé de protection 1, ont la face interne 11 de l'âme 12 du U qui s'applique sur la tranche 10 précitée, tandis que les faces internes 13 des ailes 14 du U prennent appui sur les faces 15 de l'objet qui sont contigües à la tranche 10, la couche de matériau 7 précitée revêtant la zone 6 susdite du profilé pour coopérer simultanément avec lesdites tranches 10 et faces latérales 15 de l'objet afin de s'opposer à la pénétration de ladite tranche 10 de l'objet dans la mousse constituant l'âme 12 du U.

Dans la forme de réalisation du profilé 1 illustré à la figure 4, les faces internes 13 des ailes 14 du U sont distantes l'une de l'autre d'une valeur inférieure à celle de l'épaisseur de l'objet 4 à protéger. Ces faces 13 se raccordent à la face interne 11 de l'âme 12 de U par une surface cylindrique 15' dont le diamètre est de préférence sensiblement égal à l'épaisseur de l'objet 4. La couche de matériau 7 susdite est déposée sur ladite surface cylindrique, de manière symétrique par rapport au plan passant par l'axe de cette surface et qui est parallèle aux ailes 14 du U, la section de cette couche 7, prise perpendiculairement à l'axe longitudinal du profilé 1, étant en forme de croissant de lune.

On choisira le matériau de la couche 7 ainsi que la section de ladite couche pour que cette dernière présente le meilleur compromis possible entre sa résistance aux sollicitations mécaniques auxquelles la zone 6 est soumise et sa flexibilité, dans tous les sens, qui permet au profilé 1 d'épouser étroitement les contours de l'objet à protéger, quels que soient ces contours, et de se déformer sous l'action d'une pression exercée par une partie anguleuse de l'objet, sans se déchirer, pour accompagner la mousse dans ses déformations.

A la figure 9, on a montré la zone de mousse d'un profilé 1, tel que représenté à la figure 3, qui travaille lorsque ledit profilé est soumis à des chocs dirigés, suivant les flèches 16, vers la tranche 10 de l'objet protégé par le profilé (voir la zone hachurée) lorsque ce dernier ne comprend pas la couche de matériau 7 précitée, tandis qu'à la figure 10 est représentée la zone de mousse (en hachuré) qui travaille, dans les mêmes conditions, lorsque le profilé est garni de la couche de matériau 7. On constate que la zone de mousse qui participe à l'amortissement des chocs est plus importante dans le cas du profilé de la figure 10 que dans le cas de celui de la figure 9, les parties de la couche de matériau tapissant les faces internes 13 des ailes 14 du U faisant coopérer la mousse des ailes 14, dans leur zone recouverte par ladite couche 7, avec la mousse constituant l'âme 12 du U.

Ce qui a pour résultat qu'on peut soit obtenir un meilleur amortissemement grâce au profilé suivant la figure 10 que celui assuré par le profilé montré à la figure 9 si les épaisseurs de mousse des âmes et ailes des U constituant ces deux profilés sont pareilles, soit obtenir, à l'aide du profilé suivant la figure 10, un amortissement semblable à celui du profilé de la figure 9 en réduisant l'épaisseur de mousse de l'âme 12 du profilé illustré à ladite figure 10, cette réduction pouvant atteindre 25%.

On a également remarqué, dans les profilés pourvus de la couche de matériau 7 telle que définie ci-dessus, qu'on améliorait, d'une part, le phénomène de tension des ailes des profilés avec pour conséquence que celles-ci s'appliquent plus intimement et plus fortement sur les faces correspondantes des objets à protéger et, d'autre part, la portance statique desdits profilés.

A la figure 11 est illustrée la façon dont on a effectué des tests de percement sur des échantillons de profilés, tels qu'illustrés à la figure 4, non garnis de la couche de matériau 7 et garnis de cette dernière. Ces tests ont été réalisés sur des échantillons 17 d'une longueur de 250 mm fixés horizontalement , à proximité de chacune de leurs extrémités sur des supports 18 et entre les ailes desquelles on a introduit un couteau 19, disposé à mi-distance des supports 18 et parallèlement auxdites ailes, ayant une longueur de 60 mm, une épaisseur de 7 mm et se terminant par une pointe 20 formant un angle de 90°, ce couteau étant agencé pour se déplacer, suivant une direction verticale, en direction de l'âme du profilé pour percer cette dernière. Ces tests ont montré, pour des échantillons réalisés en mousse choisie dans la famille des polyoléfines d'une densité d'environ 63Kg/m³, dont l'âme a une épaisseur d'environ 12 mm et dont la couche de matériau compact 7, également choisie dans la famille des en polyoléfines, d'une épaisseur d'environ 1 mm, que les profilés munis de cette couche 7 présentent des valeurs de résistance au percement qui sont de l'ordre de deux fois supérieures (environ 390N) par rapport à celles des mêmes profilés dépourvus de ladite couche 7 (environ 190N).

Suivant l'invention, des profilés 1, notamment tels que ceux qui sont représentés aux figures 3 et 4, peuvent également, comme montré à la figure 12, être utilisés pour protéger efficacement des objets plats 22, tels que des portières de voitures alignées parallèlement les unes aux autres, contre les chocs tout en maintenant un écartement désiré entre ces objets, lesdits profilés 1 étant disposés, par exemple par deux, perpendiculairement auxdites portières au moins sur leurs bords supérieurs 23 et sur leurs bords inférieurs 24, l'ensemble étant logé dans une caisse pour son transport, avec si nécessaire un profilé 1 venant s'appliquer sur chacune des séries de bords latéraux 25 et 26 desdites portières. Pour cette utilisation, les profilés 1 présentent, dans leurs deux ailes 14, des entailles 27 réalisées transversalement aux axes longitudinaux des profilés, pour être situées en regard les unes des autres et régulièrement espacées. La profondeur de ces entailles 27 est sensiblement égale à la hauteur des faces internes 13 des ailes 14 des profilés, pour que les bords des protières soient au contact de la couche de matériau 7 prévue sur lesdits profilés.

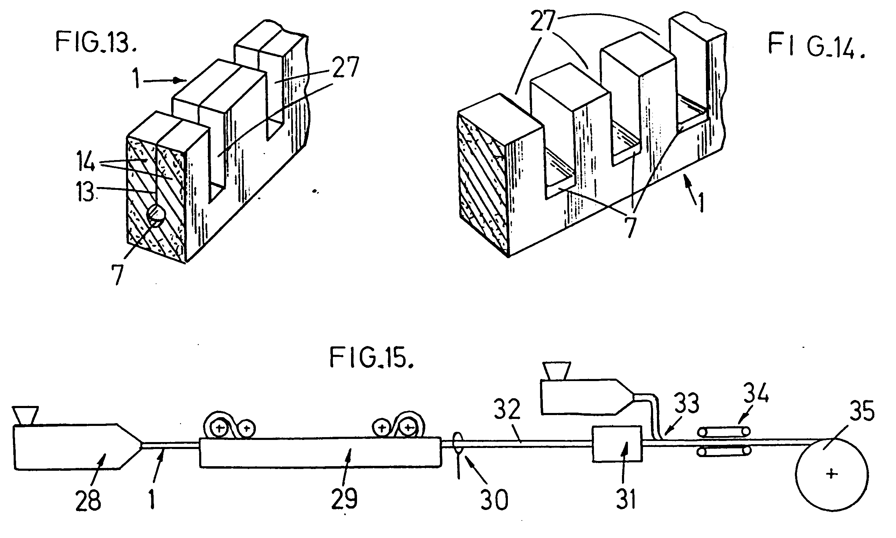

On pourrait également réaliser les profilés 1, dans leur utilisation illustrée à la figure 12, en soudant, comme montré à la figure 13, leurs ailes 14, par leurs faces internes 13.

On pourrait encore, suivant l'invention et comme montré à la figure 14, réaliser un profilé 1, pour un usage analogue à celui représenté à la figure 12, qui serait de section rectangulaire et qui présenterait des entailles 27 réalisées transversalement à l'axe longitudinal du profilé, le fond de chacune de ces entailles étant garni d'une couche de matériau 7.

Le procédé de fabrication du profilé suivant la figure 4, qui est illustré à la figure 15, consiste à extruder en continu, en 28, un profilé de section rectangulaire en délimitant dans celui-ci un évidement cylindrique, d'axe parallèle à l'axe longitudinal du profilé, qui correspond à la surface cylindrique 15' précitée du profilé, à refroidir par eau, en 29, et à sécher par air, en 30, le profilé extrudé. Le profilé est ensuite entaillé en continu, en 31, à partir de sa face supérieure 32 et parallèlement aux faces contigües à cette face 32, jusqu'à l'évidement 15' afin de délimiter le U précité. On introduit dans ladite entaille une tête d'extrusion 33 qui dépose, soit en continu, soit en section disposées à intervalles réguliers et peu distantes les unes des autres, la couche 7 de matériau précitée, le profilé terminé étant entraîné en continu en 34 pour être enroulé sur une bobine 35. Les entailles 27 précitées peuvent être réalisées dans le profilé garni de la couche de matériau 7, après que celle-ci soit solidifiée, par une unité, non représentée, guidée et entraînée pour se déplacer, d'une part, parallèlement à un plan perpendiculaire à l'axe longitudinal du profilé 1 et, d'autre part, suivant cet axe, dans le même sens et à la même vitesse linéaire que le profilé, pendant la découpe des entailles 27. Ce procédé suivant l'invention pourrait également consister à souder les ailes du U comme montré à la figure 13, après coulée de la couche de matériau 7 et avant la réalisation des entailles 27 susdites.

Il doit être entendu que l'invention n'est nullement limitée aux formes de réalisation décrites et que bien des modifications peuvent être apportées à ces dernières sans sortir du cadre du présent brevet.

## Revendications

1. Profilé (1) destiné notamment à être appliqué sur au moins deux faces contiguës (2, 3) d'objets (4) à maintenir espacés les uns des autres et à protéger contre les chocs lors de leur manutention, stockage et transport et réalisé en un matériau élastique connu pour absorber les chocs, tel que matériau se présentant sous forme de mousse, en particulier plastique, caractérisé en ce que ledit profilé est couvert, au moins dans sa zone interne (6) destinée à venir en contact avec les deux faces contiguës (2, 3) précitées situées de part et d'autre du raccordement (5) de celles-ci, d'une couche de matériau (7) présentant une résistance au percement et/ou au cisaillement et/ou au déchirement et/ou à l'abrasion qui est supérieure à la résistance du matériau élastique précité.

2. Profilé suivant la revendication 1, caractérisé en ce que la couche de matériau (7) susdite couvre la zone interne (6) précitée suivant l'axe longitudinal du profilé.

3. Profilé suivant la revendication 1, caractérisé en ce que la couche de matériau (7) susdite couvre la zone interne (6) précitée transversalement à l'axe longitudinal du profilé.

4. Profilé suivant l'une quelconque des revendications 1 à 3, caractérisé en ce que la flexibilité de la couche de matériau (7) susdite est telle que la flexibilité du profilé est voisine de celle du matériau élastique précité.

5. Profilé suivant l'une quelconque des revendications 1 à 4, caractérisé en ce que la couche de matériau (7) précitée est fixée au matériau élastique constituant le profilé.

6. Profilé suivant l'une quelconque des revendications 1 à 5, caractérisé en ce que la couche de matériau (7) susdite est continue.

7. Profilé suivant l'une quelconque des revendications 1 à 5, caractérisé en ce que la couche de matériau précitée est discontinue.

8. Profilé suivant l'une quelconque des revendications 1 à 7, caractérisé en ce que le matériau élastique et la couche de matériau susdite sont choisis dans la famille des polyoléfines et de leurs copolymères.

9. Profilé suivant l'une quelonque des revendications 1 à 8, caractérisé en ce que le profilé (1), destiné à la protection de la tranche (10) d'objets (4) de faible épaisseur et plus particulièrement de pare-brise, vitres et lunettes arrière de véhicules automobiles, a une section prise perpendiculairement à l'axe longitudinal du profilé qui est en forme de U, la tranche (10) de l'objet insérée dans le profilé prenant appui sur la face interne (11) de l'âme (12) dudit U tandis que les faces internes (13) des ailes (14) de ce dernier s'appuient sur les faces opposées (15) dudit objet (4), les faces internes (13) des ailes du U se raccordant à la face interne (11) de l'âme (12) du U par une surface sensiblement cylindrique (15') dont le diamètre est au moins égal à la distance séparant les faces internes (13) des ailes (14) susdites, la couche de matériau (7) précitée étant disposée sur cette surface cylindrique, de manière symétrique par rapport au plan passant par l'axe de cette surface et parallèle aux ailes (14) du U et de manière à pouvoir coopérer simultanément avec la tranche (10) et les faces (15) de l'objet (4).

10. Profilé suivant la revendication 9, caracterisé en ce que la section de la couche de matériau (7) susdite, prise perpendiculairement à l'axe longitudinal du profilé, est en forme de croissant de lune agencé pour que ses extrémités soient en contact avec les faces opposées (15) de l'objet à protéger.

11. Profilé suivant l'une ou l'autre des revendications 9 et 10, caractérisé en ce qu'il présente dans les deux ailes (14) du U des entailles (27) réalisées transversalement à l'axe longitudinal du profilé, régulièrement espacées et situées en regard les unes des autres, la profondeur desdites entailles (27) étant sensiblement égale à la hauteur des faces internes (13) des ailes (14) du U.

12. Procédé de fabrication du profilé suivant l'une ou l'autre des revendications 9 et 10, caractérisé en ce qu'il consiste à extruder en continu (en 28) un profilé (1) de section rectangulaire en délimitant dans celui-ci un évidement cylindrique (15') d'axe parallèle à l'axe longitudinal du profilé, à refroidir (en 29) et à sécher (en 30) le profilé extrudé, à entailler celui-ci en continu (en 31), à partir d'une de ses faces extérieures et parallèlement aux faces contigües de cette face, jusqu'à l'évidement précité afin de former le U précité et à introduire dans l'entaille réalisée une tête d'extrusion (33) qui dépose, soit en continu, soit en section disposées à intervalles réguliers et peu distantes les unes des autres, la couche (7) de matériau précitée.

13. Procédé suivant la revendication 12, caractérisé en ce que, après extrusion de la couche de matériau (7) susdite, on soude les ailes (14) du U précité par leurs faces internes (13).

14. Procédé suivant l'une ou l'autre des revendications 12 et 13, caractérisé en ce qu'on réalise les entailles (27) précitées après le dépôt et la solidification de la couche de matériau (7) précitée.

## Claims

1. Profiled section (1) designed in particular to be applied to at least two contiguous faces (2, 3) of objects (4) to keep them spaced from each other and to protect against impacts as they are handled, stored and transported, and made of an elastic material known to absorb impacts, such as a material in the form of a foam, in particular a plastic material, characterized in that the said profiled section is covered, at least in its inner zone (6) intended to come into contact with the two aforementioned contiguous faces (2, 3) situated either side of the connection (5) between these, with a layer of material (7) having resistance to piercing and/or to shear and/or to tearing and/or to abrasion which is greater than the resistance of the aforementioned elastic material.

2. Profiled section according to claim 1, characterized in that the abovementioned layer of material (7) covers the aforementioned internal zone (6) along the longitudinal axis of the profiled section.

3. Profiled section according to claim 1, characterized in that the abovementioned layer of material (7) covers the aforementioned internal zone (6) transversely to the longitudinal axis of the profiled section.

4. Profiled section according to any one of claims 1 to 3, characterized in that the flexibility of the abovementioned layer of material (7) is such that the flexibility of the profiled section is close to that of the aforementioned elastic material.

5. Profiled section according to any one of claims 1 to 4, characterized in that the aforementioned layer of material (7) is attached to the elastic material constituting the profiled section.

6. Profiled section according to any one of claims 1 to 5, characterized in that the abovementioned layer of material (7) is continuous.

7. Profiled section according to any one of claims 1 to 5, characterized in that the aforementioned layer of material is discontinuous.

8. Profiled section according to any one of claims 1 to 7, characterized in that the elastic material and the aforementioned layer of material are chosen from the family of polyolefins and copolymers thereof.

9. Profiled section according to any one of claims 1 to 8, characterized in that the profiled section (1), intended to protect the edge (10) of thin objects (4) and more particularly windscreens, windows and rear windows of motor vehicles, has a U-shaped cross section taken perpendicular to the longitudinal axis of the profiled section, the edge (10) of the object inserted into the profiled section resting on the inner face (11) of the core (12) of the said U, while the inner faces (13) of the arms (14) of the latter rest on the opposite faces (15) of the said object (4), the inner faces (13) of the arms of the U being connected to the inner face (11) of the core (12) of the U by a substantially cylindrical surface (15') of which the diameter is at least equal to the distance separating the inner faces (13) of the abovementioned arms (14), the aforementioned layer of material (7) being disposed on this cylindrical surface in a symmetrical manner with respect to the plane passing through the axis of this surface and parallel to the arms (14) of the U and so as to be able to cooperate simultaneously with the edge (10) and the faces (15) of the object (4).

10. Profiled section according to claim 9, characterized in that the cross section of the abovementioned material (7), taken perpendicularly to the longitudinal axis of the profiled section, is crescent-shaped, arranged so that its ends are in contact with the opposite faces (15) of the object to be protected.

11. Profiled section according to one or other of claims 9 and 10, characterized in that it has, in the two arms (14) of the U, notches (27) made transversely to the longitudinal axis of the profiled section, regularly spaced and situated facing each other, the depth of the said notches (27) being substantially equal to the height of the inner faces (13) of the arms (14) of the U.

12. Process for manufacturing the profiled section according to one or other of claims 9 and 10, characterized in that it consists of continuously extruding (in 28) a profiled section (1) having a rectangular cross section while delimiting therein a cylindrical recess (15') with an axis parallel to the longitudinal axis of the profiled section, of cooling (in 29) and in drying (in 30) the extruded profiled section, of notching the latter continuously (in 31), starting from one of its outer faces and parallel to the contiguous faces of this face, as far as the aforementioned recess so as to form the aforementioned U, and of introducing into the recess produced an extrusion head (33) which deposits the layer (7) of the aforementioned material, either continuously, or in sections disposed at regular intervals and a short distance from each other.

13. Process according to claim 12, characterized in that, after extruding the abovementioned layer of material (7), the arms (14) of the abovementioned U are welded together by their inner faces.

14. Process according to one or other of claims 12 and 13, characterized in that the aforementioned notches (27) are produced after the deposition and solidification of the aforementioned layer of material (7).

## Patentansprüche

1. Profil (1), insbesondere zur Anbringung an zumindest zwei aneinanderliegenden Seiten (2, 3) von Gegenständen (4) bestimmt, die beabstandet voneinander zu halten sind und gegen Stöße bei ihrer Handhabung, Lagerung und Transport zu schützen sind, hergestellt aus einem bekannten elastischen Material zum Absorbieren der Stöße, beispielweise einem Schaummaterial, insbesondere Kunststoff, dadurch gekennzeichnet, daß das Profil zumindest in seinem Innenbereich (6), der dazu bestimmt ist, in Kontakt mit den beiden aneinanderliegenden Seiten (2, 3) zu kommen, die beiderseits des Übergangs (5) dieser Seiten liegen, mit einer Materialschicht (7) abgedeckt ist, welche einen Widerstand gegenüber Durchdringen und/oder Abscheren und/oder Zerreißen und/oder Abtragung aufweist, der größer ist als der Widerstands des elastischen Materials.

2. Profil nach Anspruch 1, dadurch gekennzeichnet, daß die Materialschicht (7) den Innenbereich (6) entlang der Längsachse des Profils abdeckt.

3. Profil nach Anspruch 1, dadurch gekennzeichnet, daß die Materialschicht (7) dem Innenbereich (6) quer zur Längsachse des Profils abdeckt.

4. Profil nach einem der Ansprüche 1 bis 3, dadurch gekennzeichnet, daß die Flexibilität der Materialschicht (7) so ist, daß die Flexibilität des Profils benachbart zu der des elastischen Materials ist.

5. Profil nach einem der Ansprüche 1 bis 4, dadurch gekennzeichnet, daß die Materialschicht (7) an dem elastischen Material, welches das Profil bildet, fixiert ist.

6. Profil nach einem der Ansprüche 1 bis 5, dadurch gekennzeichnet, daß die Materialschicht (7) fortlaufend ist.

7. Profil nach einem der Ansprüche 1 bis 5, dadurch gekennzeichnet, daß die Materialschicht unterbrochen ist.

8. Profil nach einem der Ansprüche 1 bis 7, dadurch gekennzeichnet, daß das elastische Material und die Materialschicht aus der Gruppe der Polyolefine und deren Copolymere ausgewählt sind.

9. Profil nach einem der Ansprüche 1 bis 8, dadurch gekennzeichnet, daß das Profil (1), welches zum Schutz der Kante (10) von Gegenständen (4) geringer Dicke und insbesondere von Windschutzscheiben, (Seiten-)Scheiben und Heckscheiben von Kraftfahrzeugen bestimmt ist, eine senkrecht zur Längsachse des Profils verlaufende Querschnittsfläche aufweist, die U-förmig ist, wobei die Kante (10) des in das Profil eingesetzten Gegenstands gegen die Innenseite (11) des Stegs (12) des U anliegt, während die Innenseiten (13) der Schenkel (14) des U an den gegenüberliegenden Seiten (15) des Gegenstands (4) anliegen, wobei die Innenseiten (13) der Schenkel des U an der Innenseite (11) des Stegs (12) des U über eine im wesentlichen zylindrische Fläche (15') aneinander anschließen, deren Durchmesser zumindest gleich dem Abstand ist, der die Innenseiten (13) der Schenkel (14) trennt, wobei die Materialschicht (7) auf dieser zylindrischen Fläche angeordnet ist, symmetrisch in Bezug auf die durch die Achse dieser Fläche und parallel zu den Schenkeln (14) des U verlaufenden Ebene, und so, daß sie gleichzeitig mit der Kante (10) und den Seiten (15) des Gegenstands (4) zusammenwirken kann.

10. Profil nach Anspruch 9, dadurch gekennzeichnet, daß die Querschnittsfläche der Materialschicht (7), senkrecht zur Längsachse des Profils, sichelförmig ist, damit ihre Endabschnitte in Kontakt mit den gegenüberliegenden Seiten (15) des zu schützenden Gegenstands sind.

11. Profil nach Anspruch 9 oder 10, dadurch gekennzeichnet, daß es in den beiden Schenkeln (14) des U Ausnehmungen (27) aufweist, die quer zur Längsachse des Profils liegen, regelmäßig beabstandet sind und einander gegenüberliegend angeordnet sind, wobei die Tiefe der Ausnehmungen (27) im wesentlichen gleich der Höhe der Innenseiten (13) der Schenkel (14) des U ist.

12. Verfahren zum Herstellen des Profils nach Anspruch 9 oder 10, dadurch gekennzeichnet, daß ununterbrochen (bei 28) ein Profil (1) rechteckigen Querschnitts extrudiert wird, welches in sich einen zylindrischen Hohlraum (15') abgrenzt, dessen Achse parallel zur Längsachse des Profils ist, das extrudierte Profil abgekühlt (bei 29) und getrocknet (bei 30) wird, dieses fortlaufend ( bei 31) mit Ausnehmungen versehen wird, ausgehend von einer seiner Außenseiten und parallel zu den an diese Seite anstoßenden Seiten, bis zu dem Hohlraum, um das U auszubilden, und in die erzeugte Ausnehmung ein Extrusionskopf (33) eingeführt wird, der entweder ununterbrochen oder in Abschnitten, die in regelmäßigen Intervallen und in geringem Abstand voneinander angeordnet sind, die Materialschicht (7) auflegt.

13. Verfahren nach Anspruch 12, dadurch gekennzeichnet, daß nach Extrusion der Materialschicht (7) die Schenkel (14) des U an ihren Innenseiten (13) verschweißt werden.

14. Verfahren nach einem der Ansprüche 12 oder 13, dadurch gekennzeichnet, daß die Ausnehmungen (27) nach dem Auflegen und der Verfestigung der Materialschicht (7) hergestellt werden.
